# EUROPÄISCHE PATENTSCHRIFT

(11) **EP 1 998 867 B1**
(45) Veröffentlichungstag und Bekanntmachung des Hinweises auf die Patenterteilung: **04.03.2015**
(21) Anmeldenummer: 07723596.8
(22) Anmeldetag: 26.03.2007
(51) Int. Cl.: D04H 3/007, B01D 39/16, D01D 5/098, D04H 3/03, D04H 3/16, D04H 3/011

(54) **PLISSIERBARES VLIESMATERIAL UND VERFAHREN UND VORRICHTUNG ZUR HERSTELLUNG DESSELBEN**
PLEATABLE NON-WOVEN MATERIAL AND METHOD AND DEVICE FOR PRODUCTION THEREOF
MATIÈRE NON TISSÉE POUVANT ÊTRE PLISSÉE ET PROCÉDÉ ET DISPOSITIF DE FABRICATION DE LADITE MATIÈRE

(30) Priorität: 28.03.2006 DE 102006014236
(43) Veröffentlichungstag der Anmeldung: 10.12.2008
(73) Patentinhaber: Irema-Filter GmbH, 92353 Postbauer-Pavelsbach (DE)
(72) Erfinder: JUNG, Anke, 90480 Nürnberg (DE); SEEBERGER, Andreas, 90480 Nürnberg (DE)
(74) Vertreter: Wallinger, Michael
(86) Internationale Anmeldenummer: PCT/EP2007/002650
(87) Internationale Veröffentlichungsnummer: WO 2007/112877

(56) Entgegenhaltungen:
- EP-A- 0 590 307
- WO-A-03/013732
- DE-A-102006 013 170
- DE-B3- 10 310 435
- DE-U- 29 907 699
- GB-A- 2 404 347
- US-B1- 6 319 865

## Beschreibung

Die Erfindung richtet sich auf ein plissierbares Vliesmaterial umfassend tragende, formstabilisierende dickere Fasern und die Filterwirkung bestimmende dünnere Fasern und ein Verfahren und eine Vorrichtung zur Herstellung desselben.

Ein derartiges Vliesmaterial ist bekannt aus DE 103 10 435 B3. Bei diesem bekannten Filterelement ist ein luftdurchlässiges Trägermaterial vorgesehen, welches auf beiden Seiten mit einer Faserschicht aus Nano- oder Microfasern beschichtet ist, wobei die Beschichtungsdichte zur Ausbildung eines progressiven Filterelementes von der Anströmseite zur Abströmseite hin zunimmt. Durch diese Ausgestaltung konnte bereits eine erhebliche Verbesserung der Filterleistung gegenüber damals bekannten Filtermaterialien erreicht werden.

Bei solchen Filtermaterialien, die üblicher Weise plissiert und in dieser Form als Luftfilter in Kraftfahrzeugen eingesetzt werden, ist ein möglichst geringer Druckabfall beim Passieren der Luft von Bedeutung, da ein niedriger Druckabfall gleichbedeutend ist mit einem kleindimensionierten Lüf-termotor und deshalb mit einem entsprechend geringem Energieverbrauch und einer niedrigen Geräuschentwicklung.

Diese Forderung nach Filtersystemen mit niedrigem Differenzdruck konkurriert mit der geforderten Abscheideleistung und der notwendigen Stand-zeit.

Diesen beiden Forderungen kann im Prinzip durch Fasern unterschiedlicher Dicke, herkömmlicher Weise ca. 20µm einerseits und ca. 4µm andererseits, Rechnung getragen werden.

Die progressive Ausgestaltung der Faserdichte wird dadurch erreicht, dass man bei einem Herstellungsverfahren, wie es beispielsweise aus DE 41 23 122 A1 bekannt, diejenige Seite des Vlieses, auf die das Vlies bei der Herstellung abgelegt wird, bei Einbau in den Filter als Abströmseite einsetzt.

Zur weiteren Verbesserung der Filtereigenschaften arbeitet man daran, immer kleinere Faserdurchmesser für die Filterherstellung zu verwenden.

Die derzeit am meisten verbreitete Technik zur Herstellung von feinen Fa-sern ist das sogenannte Melt-Blown-Verfahren. Bei diesem Verfahren ist man bisher konstruktionsbedingt auf Fasergrößen von mehr als 2µm beschränkt. Dabei wird ein niedrigviskoses Medium verwendet, welches beim Versuch der Erzielung geringerer Faserstärken reißt.

Um die Abscheideleistung des Filters zu erhöhen und den damit verbundenen Anstieg des Druckverlustes zu minimieren, sind jedoch sehr feine Fasern wichtig, weil hierdurch die innere Oberfläche vergrößert wird und immer feinere Partikel abgeschieden werden können und parallel die Lebenszeit verlängert wird.

Ab einer Fasergröße kleiner als etwa 500 nm tritt ein sogenannter Slip-Flow-Effekt ein, der die Strömungsgeschwindigkeit an der Oberfläche der sehr dünnen Fasern (Nanofasern) im Unterschied zu dickeren Fasern nicht auf Null abbremst und so dafür sorgt, dass im Luftstrom enthaltene Feinpartikel besser diffundieren, abgefangen und zurückgehalten werden. Nach dem Stand der Technik werden solche Nanofasern mittels eines sogenannten Elektrospinning-Verfahrens aus der Lösung hergestellt, wie dies beispielsweise in DE 103 10 435 B3 beschrieben wird. Dabei wird ein Polymer mittels eines Lösungsmittels in Lösung gebracht und durch das Anlegen einer Hochspannung werden Fasern mit einem minimalen Durchmesser von bis zu 50 nm produziert.

Ein wesentlicher Nachteil dieses Elektrospinning-Verfahrens besteht in dem Einsatz großer Mengen von Lösungsmittel. Auf Grund der bei diesem Prozess entstehenden Dämpfe und der gleichzeitig anliegenden Hochspannung besteht eine nicht unproblematische Explosionsgefahr. Hinzu kommen die Umweltschädlichkeit der Dämpfe und die damit verbundenen Gesundheitsrisiken für das Bedienungspersonal. Ein weiterer Nachteil liegt in der Beschichtung des Filtermaterials in einem gesonderten Schritt, so dass sich die Nanofasern praktisch ausschließlich auf der Oberfläche der Schichtung befinden. Durch diese Mehrschichtigkeit wird eine Plissierung des Vliesmaterials stark erschwert. Dementsprechend kann üblicher Weise nur durch eine Punkt-Verbindung eine Faltbarkeit des Mediums erreicht werden.

Es sind auch Glasfasermedien bekannt, die Faserstärken unter 1µm aufwei-sen. Da dieses spröde Material jedoch unter mechanischer Belastung bricht und dadurch Partikel frei werden, ist es als kanzerogen einzustufen. Im Üb-rigen weisen Glasfasermedien bezogen auf die Abscheideleistung sehr ho-he Druckdifferenzen auf.

Aus DE 10 2004 036 440 A1 ist ein Filtermaterial bekannt, bei welchem Nanofasern in einem Stützgerüst verteilt sind. Als mögliches Herstellungsverfahren wird Elektrospinning erwähnt. Ein ähnliches Filtermaterial wird auch in WO 2006/049664 A1 beschrieben.

Die JP 02-264057 A offenbart ein Vliesmaterial, welches im Melt-Blown-Verfahren hergestellt wird, wobei aus unterschiedlichen Spinndüsen unterschiedliche Materialien extrudiert werden. Der Durchmesser der einen Spinndüsengruppe liegt bei ca. 8µm, derjenige der anderen Spinndüsengruppe bei ≤ 8µm.

Die DE 693 22 572 T2 beschreibt eine Ausgestaltung, wo Spinndüsen im Winkel zueinander angeordnet sind.

Die EP 0 674 035 A2 offenbart einen Spinnbalken mit seitlicher Luftzuführung.

Filtermaterialien sind ebenso aus GB-A-2404347 bekannt.

Hiervon ausgehend liegt der Erfindung die Aufgabe zu Grunde, ein plissierbares Vliesmaterial zu schaffen, welches sich einerseits durch besonders gute Filtereigenschaften, insbesondere eine geringe Druckdifferenz bei hoher Abscheideleistung, auszeichnet und welches andererseits umweltfreundlich und mit hoher Durchsatzleistung und dementsprechend auch kostengünstig herstellbar ist.

Diese Aufgabe wird erfindungsgemäß dadurch gelöst, dass die dünneren Fasern in Richtung längs der Oberfläche des Vliesmaterials weitgehend homogen in die dickeren Fasern inkorporiert sind und in Richtung senkrecht zur Oberfläche des Vliesmaterials ein Verteilungsdichte-Gradient der dünneren Fasern derart besteht, dass die höchste Konzentration dünnerer Fasern im Bereich der Mitte oder an einer der beiden Außenseiten besteht, wobei die dickeren und die dünneren Fasern ausgehend vom schmelzflüssigen Zustand durch Erstarren miteinander verklebt sind und aus dem gleichen Material bestehen.

Dabei ist vorzugsweise vorgesehen, dass die dickeren Fasern einen Durchmesser > 2µm und die dünneren Fasern < 1000 nm aufweisen. Insbesondere sollten die dickeren Fasern einen Durchmesser zwischen 2 und 200µm und die dünneren Fasern einen Durchmesser zwischen 50 nm und 1000 nm aufweisen. Durch solche sehr dünnen Nanofasern kann eine be-sonders gute Filterwirkung erreicht werden.

Die Fasern können vorzugsweise aus Polyamid, Polypropylen, Polyester oder einem Blend hieraus bestehen.

Die Erfindung richtet sich auch auf ein Verfahren zur Herstellung eines plissierbaren Faservlieses, wobei ein Polymer aufgeschmolzen und durch die Spinndüsen eines Spinnbalkens gedrückt wird, und wobei die so gebildeten Polymerfäden auf einem Laufband unter Ausbildung einer Vliesschicht abgelegt werden, wobei erfindungsgemäß vorgesehen ist, dass Spinndüsen unterschiedlichen Durchmessers verwendet und dadurch Polymerfäden größerer und geringerer Dicke in einem einzigen Verarbeitungsschritt erzeugt und abgelegt werden, wobei Spinndüsen unterschiedlichen Durchmessers verwendet und gleichzeitig Polymerfäden größerer und geringerer Dicke in einem einzigen Verfahrensschritt erzeugt und abgelegt werden, wobei der Durchmesser der Spinndüsen < 0,2 mm, vorzugsweise 0,15 mm, und für die Fasern größerer Dicke > 0,2mm, vorzugsweise 0,3 - 0,4mm, ist und hochviskose Polymerschmelzen mit einem Melt-Flow-Index "mfi" deutlich unter 500 verwendet werden.

Hierdurch wird die angestrebte homogene Verteilung der dünneren Fasern in dem durch die dickeren Fasern gebildeten Stützgerüst erreicht.

Günstiger Weise sind wenigstens zwei im Winkel zueinander angeordnete Spinnbalken vorgesehen, wobei sich die aus den Spinndüsen jedes Spinn-balkens austretenden Polymerfäden vor dem Auftreffen, spätestens aber beim Auftreffen auf der Unterlage vermengen und ineinander verwirbeln.

Insbesondere können zwei Spinnbalken eingesetzt werden, wobei ein erster Spinnbalken Düsen größeren Durchmessers und ein zweiter Spinnbalken Düsen geringeren Durchmessers aufweist.

Sehr wichtig für die Erzielung langer Fasern von sehr geringem Durchmesser ist die Verwendung einer hochviskosen Polymerschmelze, deren Melt-Flow-Index "mfi" deutlich unter 500 liegt.

Ein weiterer wichtiger Aspekt liegt darin, dass die an den Spinnbalken herangeführte Luft einen vergleichsweise geringen Überdruck von größenordnungsmäßig 500 mbar aufweist.

Die Erfindung richtet sich weiterhin auf eine Vorrichtung zur Durchführung des vorstehend beschriebenen Verfahrens umfassend Spinnbalken mit einer Mehrzahl nebeneinander angeordneter Spinndüsen und ein Laufband zum Ablegen der aus den Spinndüsen austretenden Polymerfäden, welche sich dadurch auszeichnet, dass wenigstens zwei Spinnbalken vorgesehen sind, die relativ zueinander so angeordnet sind, dass sich die austretenden Polymer-Fäden vor dem Ablegen, spätestens aber nach dem Auftreffen auf dem Laufband vermengen, wobei ein erster Spinnbalken Spinndüsen größeren Durchmessers und ein zweiter Spinnbalken Spinndüsen geringeren Durchmessers aufweist, und wobei der Durchmesser der Spinndüsen geringeren Durchmessers < 0,2 mm, vorzugsweise ca. 0,15 mm, und der Spinndüsen größeren Durchmessers > 0,2mm, vorzugsweise 0,3 - 0,4mm, ist.

Dabei ist insbesondere vorgesehen, dass die Spinnbalken im Winkel zueinander angeordnet sind, so dass die austretenden dünneren und dickeren Fäden untereinander vermengt und verwirbelt werden.

Insbesondere kann ein erster Spinnbalken Spinndüsen größeren Durchmessers und ein zweiter Spinnbalken Spinndüsen geringeren Durchmessers aufweisen.

Schließlich können Ventilatoren zur Erzeugung eines Luftstroms von größenordnungsmäßig 500 mbar im Austrittsbereich der Spinndüsen vorgesehen sein.

Mit besonderem Vorteil sind die Spinndüsen durch Laserung erzeugt und weisen einen Durchmesser von < 0,20 mm auf. Hierdurch kann eine hohe Dichte von Spinndüsen mit kleinem Durchmesser auf wirtschaftliche Weise erzeugt werden.

Nachfolgend wird die Erfindung an Hand von Rasterelektronenmikroskop-Aufnahmen und der Zeichnung näher erläutert.

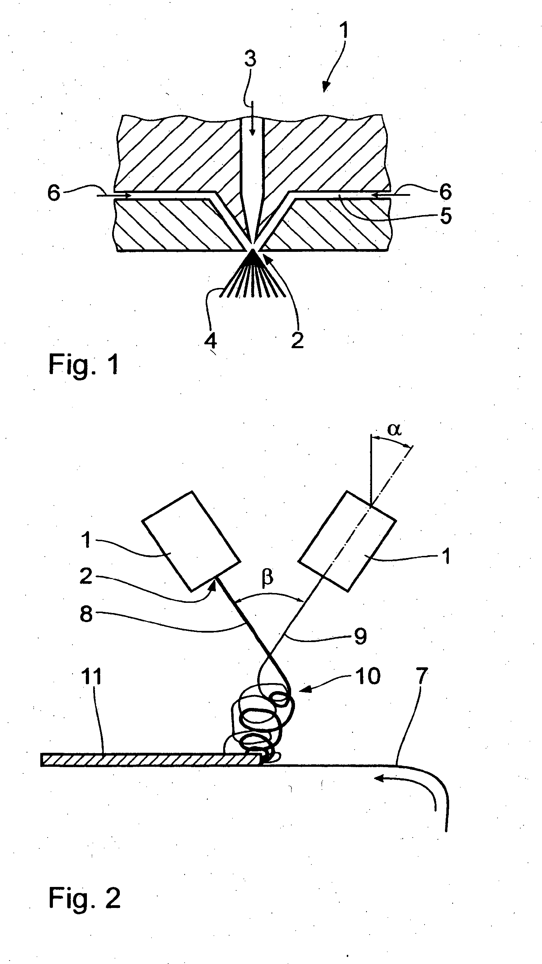

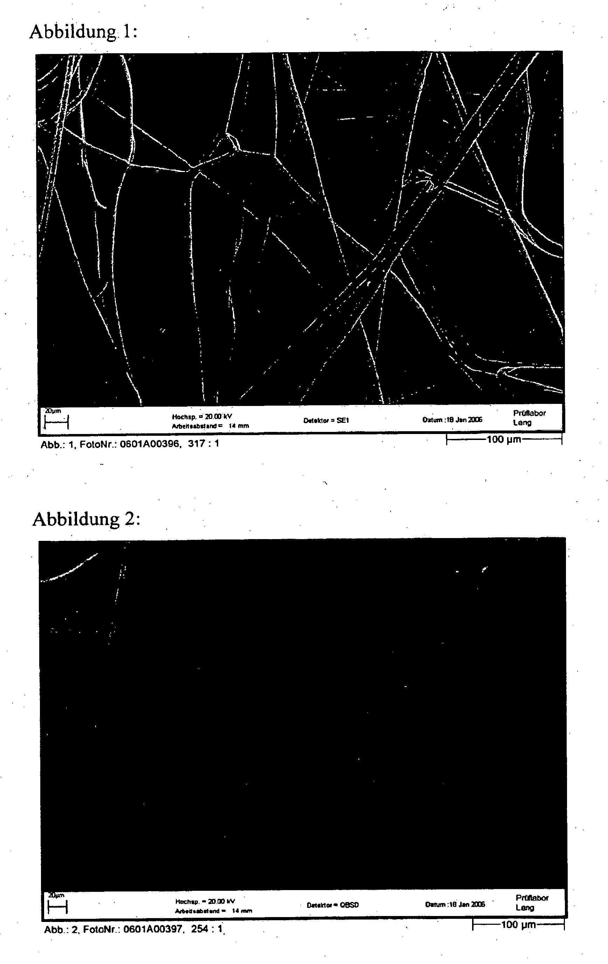

Die nachfolgenden Abbildungen 1 und 2 zeigen die Verteilung der verschiedenen Fasergrößen. (Siehe Abbildungen 1 und 2.)

Grobe Fasern (ca. 15µm Durchmesser) liegen größtenteils als Mehrfachfasern vor. Die groben Einzelfasern sind dabei zu Mehrfachfasern verbunden, wobei die Faserverbunde (bis zu 200µm) nicht nur lose aneinander gelagert sind, sondern die Oberflächen größtenteils miteinander verschmolzen sind.

Mittlere Faserdurchmesser (ca. 1-2µm) liegen meist als Einzelfasern, selten als Verbindungen von max. 3 Fasern vor.

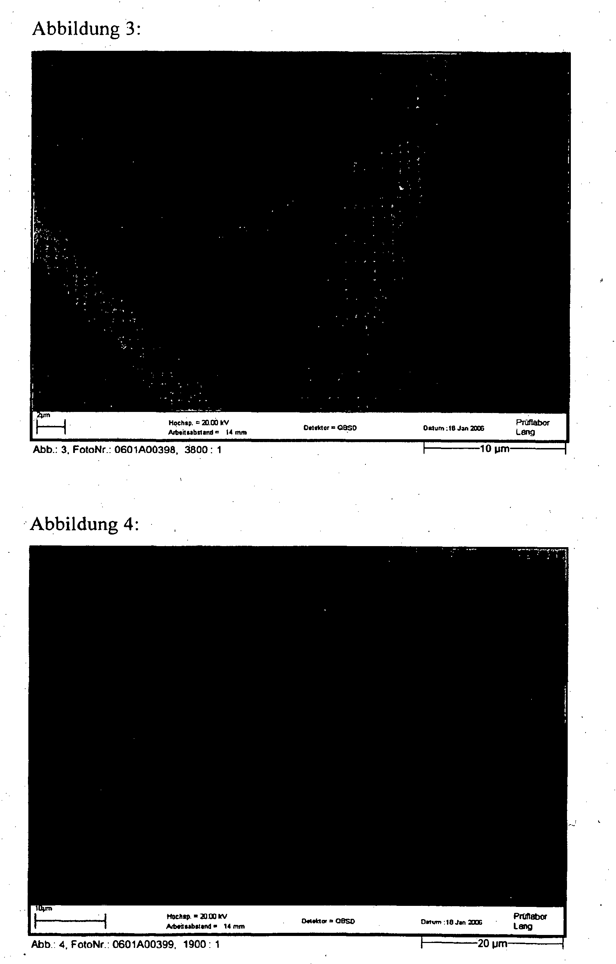

In den Übersichtsaufnahmen ist deutlich zu erkennen, dass die Faserstruktur der groben und mittleren Faserdurchmesser von einem Netz an deutlich dünneren Fasern (Nanofasern < 1µm) durchzogen ist. Die feinsten Fasern liegen dabei ausschließlich als Einzelfasern vor. (Siehe Abbildung 3.)

Die Durchmesser der dünnen Fasern betragen 733 nm bzw. 857 nm. Bei Faserdurchmessern von deutlich unter 1µm handelt es sich eindeutig um Nanofasern. (Siehe Abbildung 4.)

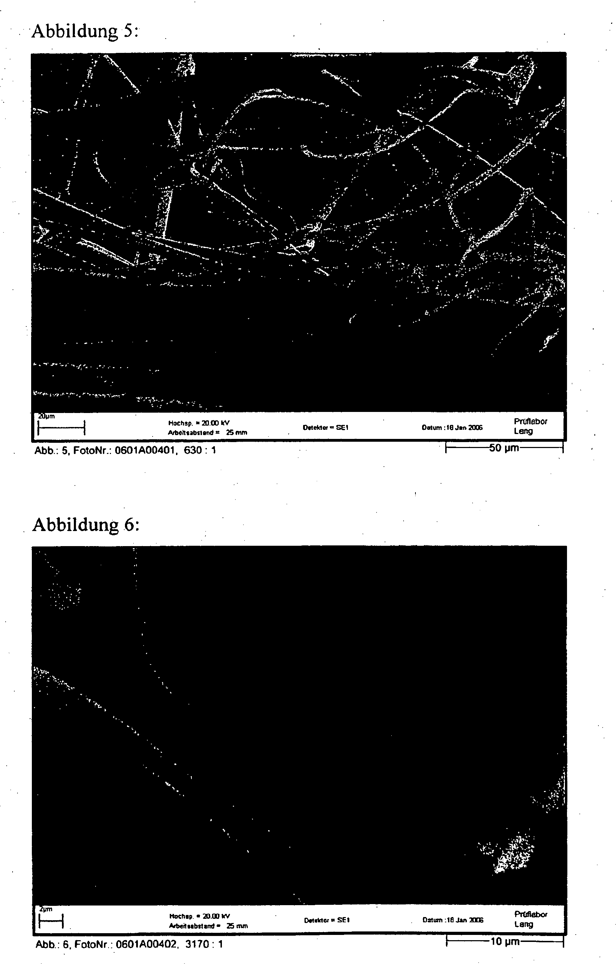

In der hohen Vergrößerung wird der extreme Unterschied zwischen einer "normalen" Faser mit ca. 11µm Durchmesser und den umliegenden Nanofasern mit ca. 750 nm deutlich. (Siehe Abbildung 5)

Zur Darstellung der Faserstrukturen im Vliesquerschnitt wurde die Aufnahme unter einer Kippung von 70° erstellt.
Im unteren Bereich der Aufnahme ist das Grundgerüst aus dicken, verschmolzenen Fasern zu erkennen. In mittlerer Bildhöhe ist ein Bereich aus Fein- und Nanofasern erkennbar. Die Deckschicht wird durch Fasern mittleren Durchmessers gebildet. (Siehe Abbildung 6.)

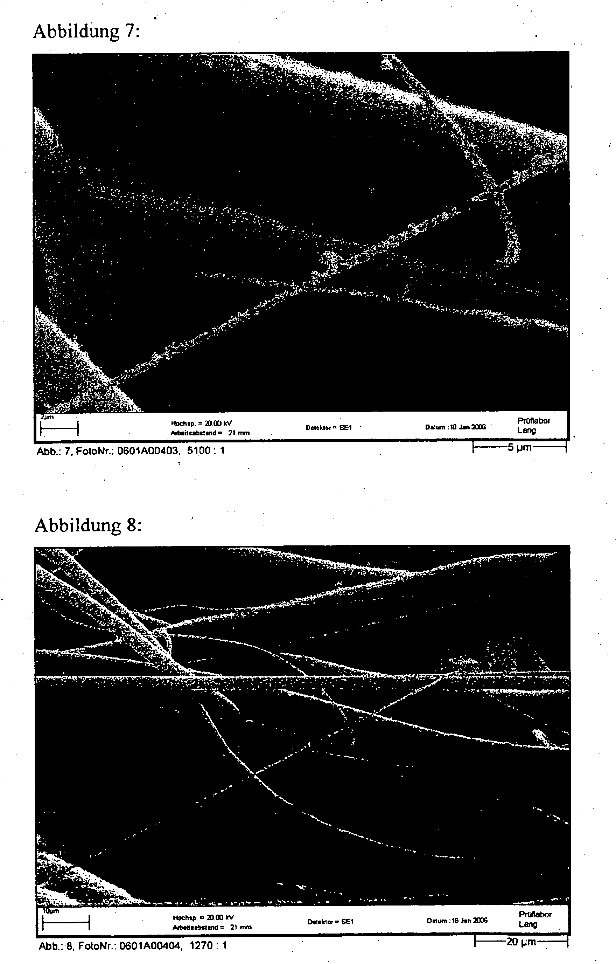

Nanofasern (Messwert: 522 nm) neben Fasern mit ca. 1-2µm Durchmesser. (Siehe Abbildung 7.)

Nach Beaufschlagung des Filtermediums mit NaCl-Partikeln (ca. 15 Minuten im Rondenprüfstand):

Im Hintergrund befindet sich eine grobe Faser (ca. 10-15µm Durchmesser). An der Oberfläche der groben Faser lagern teilweise sehr kleine NaCl-Partikel (deutlich kleiner 0,5µm) an.

An der sehr dünnen Nanofaser im Vordergrund (Messwert: 426 nm Durchmesser) ist die Anzahl der angelagerten Partikel ähnlich der Partikelanzahl an der dicken Faser, obwohl der Durchmesser der Feinstfaser nur ca. 1/25 der groben Faser beträgt.

Die vorstehende Abbildung 8 zeigt eine Übersichtaufnahme von groben, mittleren und Nanofasern nach Beaufschlagung mit NaCl-Partikeln. (Siehe Abbildung 8.)

In Verbindung mit Fig. 1 und Fig. 2 wird nachfolgend die erfindungsgemäße Vorrichtung erläutert:

Die nachfolgend erläuterte Figur 1 zeigt einen schematischen Schnitt durch einen Spinnbalken 1, der nebeneinander angeordnet eine Mehrzahl von Spinndüsen 2 aufweist, durch die unter Druck, wie durch den Pfeil 3 veranschaulicht, ein Kegel 4 flüssigen Polymers austritt. Über Luftkanäle 5 wird in Richtung der Pfeile 6 ein durch Ventilatoren erzeugter Luftstrom mit einem Druck von etwa 500 mbar herangeführt.

In Fig. 2 sind schematisch zwei Spinnbalken 1 dargestellt, welche zueinander einen spitzen Winkel β bilden und um einen Winkel α gegen die vertikale Richtung bezogen auf ein unter den Spinnbalken 1 angeordnetes Laufband 7 angeordnet sind.

Der in Fig. 2 linke Spinnbalken 1 weist Spinndüsen 2 größeren Durchmessers und der in Fig. 2 rechte Spinnbalken 1 weist Spinndüsen 2 geringeren Durchmessers auf, so dass Polymerfäden 8 größeren Durchmessers und Polymerfäden 9 geringeren Durchmessers im Bereich 10 vermischt und ineinander verwirbelt und dann unter Ausbildung eines Filter-Vlieses 11 auf dem Laufband 7 abgelegt werden. Die dünneren Polymerfäden 9 sind hierdurch weitgehend homogen zwischen den dickeren Polymerfäden 8 verteilt.

## Patentansprüche

1. Plissierbares Vliesmaterial umfassend tragende, formstabilisierende dickere Fasern und die Filterwirkung bestimmende dünnere Fasern, **dadurch gekennzeichnet, dass** die dünneren Fasern in Richtung längs der Oberfläche des Vliesmaterials weitgehend homogen in die dickeren Fasern inkorporiert sind und in Richtung senkrecht zur Oberfläche des Vliesmaterials ein Verteilungsdichte-Gradient der dünneren Fasern derart besteht, dass die höchste Konzentration dünnerer Fasern im Bereich der Mitte oder an einer der beiden Außenseiten besteht, wobei die dickeren und die dünneren Fasern ausgehend vom schmelzflüssigen Zustand durch Erstarren miteinander verklebt sind, aus dem gleichen Material bestehen und die dickeren Fasern als Polymerfäden größeren Durchmessers und die dünneren Fasern als Polymerfäden geringeren Durchmessers ausgebildet sind, die untereinander vermengt und ineinander verwirbelt sind.

2. Plissierbares Vliesmaterial nach Anspruch 1, **dadurch gekennzeichnet, dass** die dickeren Fasern einen Durchmesser > 2µm und die dünneren Fasern < 1000 nm aufweisen.

3. Plissierbares Vliesmaterial nach Anspruch 2, **dadurch gekennzeichnet, dass** die dickeren Fasern einen Durchmesser zwischen 2 und 200µm aufweisen.

4. Plissierbares Vliesmaterial nach Anspruch 2, **dadurch gekennzeichnet, dass** die dünneren Fasern einen Durchmesser zwischen 50 nm und 1000 nm aufweisen.

5. Plissierbares Vliesmaterial nach Anspruch 1, **dadurch gekennzeichnet, dass** die Fasern aus Polyamid, Polypropylen, Polyester oder einem Blend hieraus bestehen.

6. Verfahren zur Herstellung eines plissierbaren Faservlieses, wobei ein Polymer aufgeschmolzen und durch die Sinndüsen eines Spinnbalkens gedrückt wird, und wobei die so gebildeten Polymer-Fäden auf einem Laufband unter Ausbildung einer Vliesschicht abgelegt werden, **dadurch gekennzeichnet, dass** Spinndüsen (2) unterschiedlichen Durchmessers verwendet und gleichzeitig Polymerfäden (8, 9) größerer und geringerer Dicke in einem einzigen Verfahrensschritt erzeugt und abgelegt werden, wobei für die dünnen fasern der Durchmesser der Spinndüsen (2) < 0,2 mm, vorzugsweise 0,15 mm, und für die Fasern größerer Dicke > 0,2 mm, vorzugsweise 0,3 - 0,4 mm, ist und hochviskose Polymerschmelzen mit einem Melt-Flow-Index "mfi" deutlich unter 500 verwendet werden, wobei ein erster Spinnbalken (1) Düsen größeren Durchmessers und ein zweiter Spinnbalken (1) Düsen geringeren Durchmessers aufweist..

7. Verfahren nach Anspruch 6, **dadurch gekennzeichnet, dass** wenigstens zwei im Winkel zueinander angeordnete Spinnbalken (1) verwendet werden, wobei sich die aus den Spinndüsen (2) jedes Spinnbalkens (1) austretenden Polymerfäden (9) vor dem Auftreffen auf der Unterlage vermengen und ineinander verwirbeln.

8. Verfahren nach Anspruch 6, **dadurch gekennzeichnet, dass** hochviskose Polymerschmelzen eingesetzt werden.

9. Verfahren nach Anspruch 8 **dadurch gekennzeichnet, dass** der Melt-Flow-Index "mfi" deutlich unter 500 liegt.

10. Verfahren nach Anspruch 6, **dadurch gekennzeichnet, dass** an den Spinnbalken Luft mit einem Druck in der Größenordnung von 500 mbar herangeführt wird.

11. Vorrichtung zur Durchführung des Verfahrens nach Anspruch 6 bis 10, umfassend Spinnbalken mit einer Mehrzahl nebeneinander angeordneter Spinndüsen und ein Laufband zum Ablegen der aus den Spinndüsen austretenden Polymerfäden, **dadurch gekennzeichnet, dass** wenigstens zwei Spinnbalken (1) vorgesehen sind, die relativ zueinander so angeordnet sind, dass sich die austretenden Polymer-Fäden vor dem Ablegen auf dem Laufband (7) vermengen, wobei ein erster Spinnbalken (1) Spinndüsen (2) größeren Durchmessers und ein zweiter Spinnbalken (1) Spinndüsen (2) geringeren Durchmessers aufweist, und wobei der Durchmesser der Spinndüsen (2) geringeren Durchmessers < 0,2 mm, vorzugsweise ca. 0,15, und der Spinndüsen (2) größeren Durchmessers > 0,2 mm, vorzugsweise 0,3 - 0,4 mm, ist.

12. Vorrichtung nach Anspruch 11, **dadurch gekennzeichnet, dass** wenigstens zwei Spinnbalken (1) im Winkel (β) zueinander angeordnet sind.

13. Vorrichtung nach Anspruch 11, **dadurch gekennzeichnet, dass** Ventilatoren zur Erzeugung eines Luftstroms mit einem Druck von größenordnungsmäßig 500 mbar im Austrittsbereich der Spinndüsen (2) vorgesehen sind.

14. Vorrichtung, insbesondere nach Anspruch 11, **dadurch gekennzeichnet, dass** die Spinndüsen (2) durch Laserbohrung erzeugt sind.

## Claims

1. A pleatable nonwoven material comprising supporting, form-stabilizing thicker fibers and thinner fibers determining the filter effect, **characterized in that** the thinner fibers are incorporated largely homogeneously in the thicker fibers in a direction along the surface of the nonwoven material and wherein there is a distribution density gradient of the thinner fibers in a direction perpendicular to the surface of the nonwoven material such that the highest concentration of the thinner fibers is in the region of one of the group comprising the center and one of the two outer faces, wherein the thicker fibers and the thinner fibers are being bonded together by solidification from the melted condition while being made of the same material, the thicker fibers being polymer threads of larger diameters and the thinner fibers being polymer threads of smaller diameters which are tangled and intertwined with each other.

2. The pleatable nonwoven material according to claim 1, **characterized in that** the thicker fibers have a diameter > 2 µm and the thinner fibers have a diameter < 1000 nm.

3. The pleatable nonwoven material according to claim 2, **characterized in that** the thicker fibers have a diameter of between 2 and 200 µm.

4. The pleatable nonwoven material according to claim 2, **characterized in that** the thinner fibers have a diameter of between 50 nm and 1000 nm.

5. The pleatable nonwoven material according to claim 1, **characterized in that** the fibers consist of polyamide, polypropylene, polyester or a mixture thereof.

6. A method of producing a pleatable nonwoven fabric, in which a polymer is melted and pressed through respective spinnerets of a spinning beam, and in which the polymer threads thus produced are laid down on a conveyor belt such as to form a nonwoven layer, **characterized in that** spinnerets (2) of different diameters are used and higher thickness and lower thickness polymer threads (8, 9) are simultaneously produced and are laid down in a single step, wherein the diameter of the spinnerets (2) for the thin fibers is < 0.2 mm, preferably is 0.15 mm, and wherein the diameter of the spinnerets (2) for the larger-diameter fibers is > 0.2 mm, preferably 0.3 to 0.4 mm, wherein with high-viscosity polymer melts are used with a melt flow index "mfi" of well below 500, wherein a first spinning beam (1) comprises spinnerets (2) of a larger diameter and a second spinning beam (1) comprises spinnerets (2) of a smaller diameter.

7. The method of claim 6, **characterized in that** at least two spinning beams (1) are used, which are disposed at an angle with respect to each other, wherein the polymer threads (9) leaving the spinnerets (2) of each of the spinning beams (1) tangle and intertwine with each other before contact with the belt.

8. The method of claim 6, **characterized in that** high-viscosity polymer melts are used.

9. The method of claim 8, **characterized in that** the melt flow index "mfi" is well below 500.

10. The method of claim 6, **characterized in that** the spinning beams are supplied with air having a pressure in the order of a magnitude of 500 mbar.

11. An apparatus for implementation of the method according to any one of the claims 6 to 10, comprising spinning beams including a plurality of spinnerets arranged next to each other and a conveyor for laying down the polymer threads leaving the spinnerets, **characterized in that** at least two spinning beams (1) are provided which are arranged relative to each other such that the leaving polymer threads tangle with each other before contact with the conveyor belt (7), a first spinning beam (1) comprising larger diameter spinnerets (2) and a second spinning beam (1) comprising smaller diameter spinnerets (2), with the diameter of the smaller diameter spinnerets (2) being < 0.2 mm, preferably being approximately 0.15 mm, and that of the larger diameter spinnerets (2) being > 0.2 mm, preferably being 0.3 to 0.4 mm.

12. The apparatus according to claim 11, **characterized in that** at least two spinning beams (1) are arranged at an angle (β) to each other.

13. The apparatus according to claim 11, **characterized in that** fans are provided in the outlet region of the spinnerets (2) for generation of an air stream with a pressure in the order of magnitude of 500 mbar.

14. The apparatus according to claim 11, **characterized in that** at the spinnerets (2) are produced by laser drilling.

## Revendications

1. Matière non tissée plissable comprenant des fibres plus épaisses de support et de stabilisation de forme et des fibres plus minces déterminant l'effet de filtrage, **caractérisée en ce que** les fibres plus minces sont incorporées de manière largement homogène dans les fibres plus épaisses dans une direction parallèle à la surface de la matière non tissée et que dans une direction perpendiculaire à la surface de la matière non tissée, un gradient de densité de répartition des fibres est tel que la concentration maximale de fibres plus minces se situe dans la zone du milieu ou sur l'une des deux faces externes, où les fibres plus épaisses et plus minces sont collées les unes aux autres par solidification à partir d'un état fondu, sont constituées de la même matière et les fibres plus épaisses sont formées de fils polymères ayant plus grand diamètre et les fibres plus minces sont formées de fils polymères ayant un plus petit diamètre qui sont mélangés et entrelacés.

2. Matière non tissée plissable selon la revendication 1, **caractérisée en ce que** les fibres plus épaisses ont un diamètre > 2 µm et les fibres plus minces ont un diamètre < 1000 nm.

3. Matière non tissée plissable selon la revendication 2, **caractérisée en ce que** les fibres plus épaisses ont un diamètre entre 2 et 200 µm.

4. Matière non tissée plissable selon la revendication 2, **caractérisée en ce que** les fibres plus minces ont un diamètre entre 50 nm et 1000 nm.

5. Matière non tissée plissable selon la revendication 1, **caractérisée en ce que** les fibres sont en polyamide, polypropylène, polyester ou un mélange de ces matières.

6. Procédé de fabrication d'une matière non tissée plissable, où un polymère est fondu et pressé à travers les filières d'une poutre de filage et où les fils polymères ainsi formés sont déposés sur un tapis roulant, formant ainsi une couche de matière non tissée, **caractérisé en ce que** sont utilisés des filières (2) de diamètres différents et que des fils polymères (8, 9) d'épaisseur plus grande et plus petite sont produits et déposés simultanément en une seule étape du procédé, où le diamètre des filières (2) pour les fibres minces est < 0,2 mm, de préférence 0,15 mm et pour les fibres plus épaisses > 0,2 mm, de préférence compris entre 0,3 et 0,4 mm et des polymères fondus hautement visqueux ont un indice de fluidité (MFI ; Melt-Flow-Index) nettement inférieur à 500, où une première poutre de filage (1) comporte des filières de plus grand diamètre et une deuxième poutre de filage (1) comporte des filières de plus petit diamètre.

7. Procédé selon la revendication 6, **caractérisé en ce que** sont utilisées au moins deux poutres de filage (1) disposées de manière à former un angle l'une par rapport à l'autre, où les fils polymères (9) s'échappant des filières (2) de chaque poutre de filage (1) se mélangent et s'entrelacent avant de toucher le support.

8. Procédé selon la revendication 6, **caractérisé en ce que** sont utilisés des polymères fondus hautement visqueux.

9. Procédé selon la revendication 8, **caractérisé en ce que** l'indice de fluidité « MFI » est nettement inférieur à 500.

10. Procédé selon la revendication 6, **caractérisé en ce que** de l'air est amené aux poutres de filage à une pression de l'ordre de 500 mbar.

11. Dispositif pour la mise en oeuvre du procédé selon les revendications 6 à 10, comprenant des poutres de filage avec une pluralité de filières disposées côte à côte et un tapis roulant sur lequel sont déposés les fils polymères s'échappant des filières, **caractérisé en ce que** sont prévues au moins deux poutres de filage (1) disposées l'une par rapport à l'autre de telle manière que les fils polymères s'échappant des filières se mélangent avant d'être déposées sur le tapis roulant (7), où une première poutre de filage (1) comporte des filières (2) ayant un plus grand diamètre et une deuxième poutre de filage (1) comporte des filières (2) ayant un plus petit diamètre et où le diamètre des filières (2) de plus petit diamètre est < 0,2 mm, de préférable égal à environ 0,15 mm et le diamètre des filières (2) de plus grand diamètre est > 0,2 mm, de préférence entre 0,3 et 0,4 mm.

12. Dispositif selon la revendication 11, **caractérisé en ce qu**'au moins deux poutres de filage (1) sont disposées de manière à former un angle (β) l'une par rapport à l'autre.

13. Dispositif selon la revendication 11, **caractérisé en ce que** des ventilateurs sont prévus pour générer un flux d'air à une pression de l'ordre de 500 mbar dans la zone d'échappement des filières (2).

14. Dispositif, notamment selon la revendication 11, **caractérisé en ce que** les filières (2) sont fabriquées par perçage au laser.
